Europäisches Patentamt

European Patent Office

Office européen des brevets

(19)

(11)     EP 1 025 973 B1

(12)     **EUROPEAN PATENT SPECIFICATION**

(45) Date of publication and mention
of the grant of the patent:
**17.11.2004   Bulletin 2004/47**

(21) Application number: **99926850.1**

(22) Date of filing: **30.06.1999**

(51) Int Cl.⁷: **B29C 45/14**

(86) International application number:
**PCT/JP1999/003517**

(87) International publication number:
**WO 2000/000339 (06.01.2000 Gazette 2000/01)**

(54) **LAMINATED FILM FOR INSERT MOLDING AND PROCESS FOR INSERT MOLDING WITH THE SAME**

LAMINIERTE FOLIE ZUM EINSATZFORMEN UND VERFAHREN ZUM EINSATZFORMEN MIT DIESER FOLIE

FILM LAMINE DESTINE AU MOULAGE PAR INSERTION ET PROCEDE DE MOULAGE PAR INSERTION DUDIT FILM

(84) Designated Contracting States:
**DE FR GB**

(30) Priority:  **30.06.1998  JP  18401298**

(43) Date of publication of application:
**09.08.2000   Bulletin 2000/32**

(73) Proprietor: **NISSHA PRINTING CO., LTD.
Nakagyo-ku Kyoto-shi Kyoto 604-8873 (JP)**

(72) Inventors:
• **NAKAMURA, Yuzo, Nissha Printing Co., Ltd
Kyoto 604-8873 (JP)**
• **TERASHITA, Masaru, Nissha Printing Co., Ltd
Kyoto 604-8873 (JP)**

(74) Representative: **HOFFMANN - EITLE
Patent- und Rechtsanwälte
Arabellastrasse 4
81925 München (DE)**

(56) References cited:
**EP-A- 0 371 743          EP-A- 0 820 878
WO-A-97/40990         WO-A1-97/40990
DE-A- 4 425 342         JP-A- 9 095 098
JP-A- 11 123 897        US-A- 4 101 698
US-A- 4 902 364         US-A- 5 387 304
US-A- 5 725 712**

• **PATENT ABSTRACTS OF JAPAN vol. 016, no.
281 (P-1375), 23 June 1992 (1992-06-23) & JP 04
075085 A (TOPPAN PRINTING CO LTD), 10 March
1992 (1992-03-10)**

**Description**

Technical Field

The present invention relates to a laminated film and an insert film employed for applying abrasion resistance and chemical resistance to the surface of an insert molded product having a three-dimensional shape with deep draw, and also relates to a method for preparing such a three-dimensional insert molded product with deep draw the surface of which is applied to abrasion resistance and chemical resistance.

The present invention is particularly useful for preparing automobile interior panels such as periphery of power switches, floor console panels, switch bases, door trimming panels, meter gages and dash boards, and automobile exterior panels such as moles, wheel caps, center pillars, door mirrors and tail lamps.

Background

With respect to methods for preparing an insert molded product having excellent surface abrasion resistance and chemical resistance, a method has been proposed in which: A transfer film which has a transfer layer containing a surface protecting layer, which is placed on one surface of a releasing film is used. This transfer film is inserted and placed inside a metal mold with the transfer layer facing inside. The metal mold is closed, and a resin is injected into a cavity to fill the the metal mold. Thereby, the resin is molded, and the surface protecting layer is bonded thereto and allowed to cover the surface thereof.

For example, Japanese Patent Kokai Publication No. 58895/1998 has disclosed a transfer film used for such a method. The transfer film has a releasing film and a surface protecting layer formed on a releasing surface of the releasing film. The surface protecting layer is made of an active energy ray curable resin, which is prepared by allowing a heat and active energy ray curable resin composition to thermally react so as to make it tack-free.

This transfer film has the following excellent feature. Since the surface protecting layer is tack-free, another layer is easily printed or superposed thereon, and the transfer film is easily rolled or taken up. Additionally, since the surface protecting layer is not completely cured and has sufficient flexibility until it is irradiated with active energy rays, the surface protecting layer is readily conformed to the surface of a molded product having a three-dimensional shape.

In this transfer film, in order to make the surface protecting layer tack free, a thermal reaction have to be carried out, in the state that the surface protecting layer is placed on the releasing film. The heat of 100 to 180°C is generally applied.

If the releasing film is poor in heat resistance, when the transfer film is passed through heating atmosphere, the releasing film is extended due to tension applied thereto for film feeding in the direction of the tension, thereby the releasing film is waved or cut. If the releasing film is extended and waved, a surface of the transfer film is waved, and wrinkles tend to appear. Further, in the case when a pattern layer is printed on the surface protecting layer in the post process, it becomes difficult to obtain a desired pattern. The dimensional stability also becomes poor upon application of heat in the post processes such as, for example, a drying process for a printed layer, a heat treatment for an anchor layer, etc., and a process for forming a vapor deposition layer, etc. In other words, in the transfer film disclosed in the above-mentioned patent publication, it is necessary to use a material having excellent heat resistance, as the releasing film.

However, such a heat resistant material is generally poor in flexibility. For example, although a polyethylene terephthalate film (biaxial oriented) is excellent in heat resistance, it is not sufficiently conformed onto a surface having a three-dimensional shape with deep draw because of its insufficient flexibility.

As a result, in the conventional transfer film as described in the above-mentioned patent publication, although the surface protecting layer is excellent in flexibility, since the releasing film is poor in flexibility, it is not sufficiently conformed onto the surface of a molded product having a three-dimensional shape with deep draw. Therefore, it cannot be employed for preparing such a molded product.

The present invention has been devised to solve the conventional problems, and its objective is to provide a laminated film and an insert film employed for applying abrasion resistance and chemical resistance to the surface of an insert molded product having a three-dimensional shape with deep draw, and also to provide a method for preparing such a three-dimensional insert molded product with deep draw the surface of which is applied to abrasion resistance and chemical resistance, by using such films.

US 5,725,712 concerns a dry paint transfer process for making high DOI automotive body panels. It discloses a laminated film for preparing an insert molded product comprising a heat resistant releasing film having a releasing phase, a transfer layer formed thereon, and deformable film made of a film material, which is formed on the opposite side of the transfer phase of the transfer layer. The transfer layer comprises a surface protecting layer formed on the releasing phase of the releasing film.

WO97/40990 describes a thermo- and active energy beam setting resin composition, which can be used for protective layers of transfer materials. This protective layer is made of a thermal reactant of a thermo- and active energy line-setting resin composition containing as effective components a polymer having a (meth)acrylic equivalent of 100-300 g/eq, a hydroxyl group value of 20-500 and a weight average molecular weight of 5000-50 000, and multifunctional isocyanate.

Summary of the Invention

According to the invention there is provided a laminated film for preparing an insert molded product comprising

i) a releasing film (3) made of a heat resistant film material having a releasing face,

ii) a transfer layer (4) comprising a surface protecting layer (5), the surface protecting layer (5) is formed on the releasing face of the releasing film (3) and is a heat reactant of a heat and active ray curable resin composition comprised of a polymer having a (meth)acryl equivalent of 100-300 g/eq, a hydroxyl value of 20-500 and a weight average molecular weight of 5.000-50.000, and a multifunctional isocyanate as effective components;

iii) a deformable film (2) made of a film material formed on the transfer face of the transfer layer (4), and

iv) a joining layer (8) for bonding the deformable film (2), which is placed in the transfer layer (4) or between the transfer layer (4) and the deformable film (2).

Also, the present invention provides a process for preparing such a laminated film, comprising:

i) providing a releasing film (3) made of a heat resistant film material having a releasing face,

ii) applying, on the releasing face of the releasing film (3), a heat and active energy ray curable resin composition comprised of a polymer having a (meth)acryl equivalent of 100-300 g/eq, a hydroxyl value of 20-500 and a weight-average molecular weight of 5.000-50.000, and multifunctional isocyanate as effective components,

iii) heating the heat and active energy ray curable resin composition, and semi-crosslinking it, to form a surface protecting layer (5),

iv) placing thereon a joining layer, for bonding the following deformable film, and

v) placing thereon a deformable film (2) made of a film material having sufficient flexibility to be deformed and conformed over the mold cavity face corresponding to a three-dimensional shape having deep-draw

Furthermore, the invention provides a method for preparing an insert molded product having a three-dimensional shape with deep-draw, comprising

i) removing the releasing film (3) from a laminated film as defined in claim 1

ii) inserting and placing the resulting insert film into a metal mold with the deformable film (2) facing inside

iii) preliminary molding the insert film so as to allow it to conform over the mold cavity face

iv) injecting resin into the cavity so as to be filled with the resin with the metal mold being closed, thereby molding the resin, the insert film being bonded thereto and allowed to cover the surface thereof and

v) irradiating the surface protecting layer of the insert film with active energy rays so as to cure the surface protecting layer.

Preferred embodiments are described herein below and are defined in the appended claims.

The insert film means a film material which is inserted into a metal mold in the process for preparing an insert molded product.

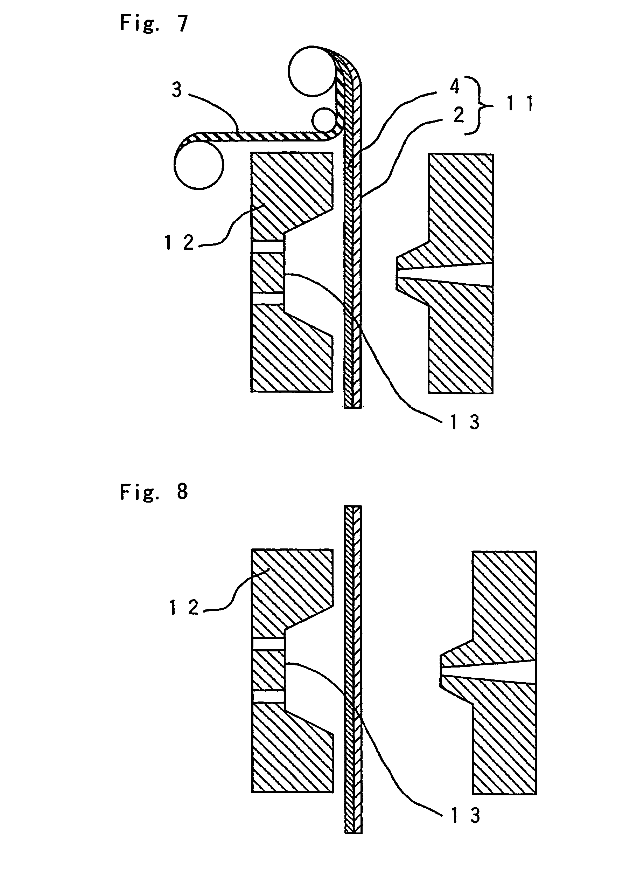

The wording "having deformable property" means that the film has a sufficient flexibility so that it can be deformed and conformed over the mold cavity face corresponding to a three-dimensional shape having deep draw, in the process for preparing an insert molded product using a laminated film, as illustrated in Figs. 7 through 11 for example. The wording "poor in deformable property" means that the film is insufficient in flexibility, with the result that it is conformed over only the surface having a three-dimensional shape having shallow draw, such as for example polyethylene terephthalate.

Brief Description of the Drawings

Fig. 1 is a cross-sectional view showing one example of a laminated film in accordance with the present invention.
Fig. 2 is a cross-sectional view showing another example of a laminated film in accordance with the present invention.
Fig. 3 is a cross-sectional view showing another example of a laminated film in accordance with the present invention.
Fig. 4 is a cross-sectional view showing another example of a laminated film in accordance with the present invention.
Fig. 5 is a cross-sectional view showing another example of a laminated film in accordance with the present invention.
Fig. 6 is a cross-sectional view showing another example of a laminated film in accordance with the present invention.
Fig. 7 is an explanatory drawing that shows one example of a preparing process for an insert molded product in accordance with the present invention.
Fig. 8 is an explanatory drawing that shows another example of a preparing process for an insert molded product in accordance with the present invention.
Fig. 9 is an explanatory drawing that shows another example of a preparing process for an insert molded product in accordance with the present invention.
Fig. 10 is an explanatory drawing that shows another example of a preparing process for an insert molded product in accordance with the present invention.
Fig. 11 is an explanatory drawing that shows another example of a preparing process for an insert molded product in accordance with the present invention.

In the figures, reference number 1 represents a transfer film; 2 is a deformable film; 3 is a releasing film; 4 is a transfer layer; 5 is a surface-protecting layer; 6 is an anchor layer; 7 is a pattern layer; 8 is a joining layer; 9 is a vapor deposition layer; 10 is a transparent colored layer; 11 is an insert film; 12 is a metal mold; 13 is a mold cavity face; 14 is a cavity; 15 is a heating means; 16 is a suction hole; 17 is a molded resin; 18 is a resin molded product; 19 is an insert molded product; and 20 is an active energy ray.

Detailed Description of the Invention

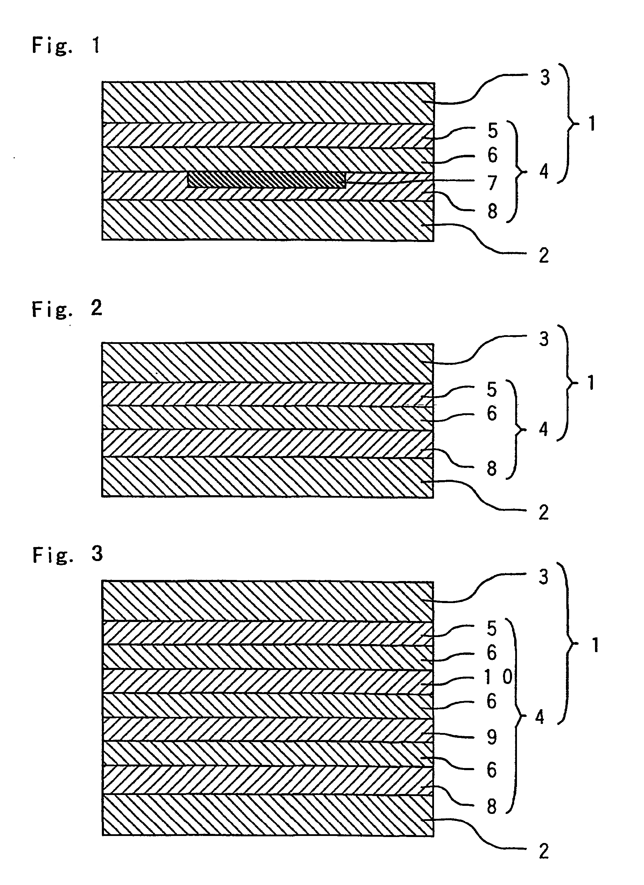

Referring to the figures, the following description will discuss in detail the laminated film for preparing an insert molded product of the present invention, the preparing method for an insert film using such a film and the method for preparing the insert molded product.
First, an explanation will be given of the laminated film for preparing an insert molded product of the present invention.
A laminated film, shown in Fig. 1 as one example, is composed of a deformable film 2, and a transfer film 1 applied on the deformable film 2 with its transfer layer 4 side serving as a joining face. The transfer film 1 is composed of a releasing film 3 and a transfer layer 4 formed on one surface of the releasing film 3. The transfer layer 4 is composed of a surface protecting layer 5, which is a heat reactant of, a heat and active energy ray curable resin composition which is comprised of a polymer having a (metha)acryl equivalent of 100 to 300 g/eq, a hydroxyl value of 20 to 500 and a weight-average molecular weight of 5000 to 50000, and multifunctional isocyanate as effective components; an anchor layer 6; a pattern layer 7; and a joining layer 8.
As the material of the releasing film 3 in the transfer film 1, resin films which are resistant to heat which is applied at the time when the surface protecting layer 5 is formed, that is, the heat in the range of 100 to 180°C may be used, and examples thereof include a polyethylene terephthalate film, a polyimide film and a polybutylene terephthalate film. The wording "having resistance" means that the releasing film 3 is not extended in the tensile direction due to tension applied for film feeding, thereby, neither surface waves nor cuts is caused on the releasing film 3. The releasing film may be formed by a material that is poor in deformable property, such as, for example, polyethylene terephthalate.
A releasing layer may be formed on the whole releasing face of the releasing film in order to improve releasing property from the transfer layer 4. However, it is not necessary to form the releasing layer when the releasing film itself has sufficient releasing property.

Examples of the material for forming the releasing layer include a melamine resin-based releasing agent, a silicone resin-based releasing agent, a fluororesin-based releasing agent, a cellulose derivative-based releasing agent, an urea resin-based releasing agent, a polyolefin resin-based releasing agent, a paraffin-based releasing agent, an epoxy resin-based releasing agent, an aminoalkyd resin-based releasing agent, and composite-type releasing agents of these materials.

The surface protecting layer 5 is the layer which may be cured upon irradiation of active energy rays after the insert molding, and which protects the resin molded product 18 and the decorations placed thereon, from chemicals, friction, etc. It is made from a heat-crosslinking reactant of a heat and active energy ray curable resin composition which contains, as effective components, a specific polymer and multifunctional isocyanate in a specific combination amount.

The characteristic values of the polymer is determined in order to satisfy the required physical or chemical properties of the protecting layer 5 after or before active energy ray irradiation. That is, the polymer has a (meth)acrylic equivalent weight from 100 to 300 g/eq, preferably from 150 to 300 g/eq, in view of curability on active energy ray irradiation. When the (meth)acrylic equivalent weight is more than 300 g/eq, abrasion resistance after active energy ray irradiation becomes insufficient. The polymer having a (meth)acrylic equivalent weight of less than 100 g/eq is difficult to be obtained.

The hydroxyl value of the polymer is from 20 to 500, preferably from 100 to 300, in view of reactivity with the polyfunctional isocyanate used together. When the hydroxyl value is less than 20, reactivity with the polyfunctional isocyanate becomes insufficient, and heat crosslinking degree of the active energy ray curable resin composition becomes low. Thereby, tack remains on the surface protecting layer 5 or solvent resistance decreases, and consequently, it becomes difficult to print and superpose another layer onto the surface protecting layer 5 or to take up the transfer film 1. The polymer having a hydroxyl value of over 500 is difficult to be obtained. The weight-average molecular weight of the polymer is from 5000 to 50000, preferably from 8000 to 40000. When the weight-average molecular weight of the polymer is less than 5000, tack remains on the surface protecting layer 5 or solvent resistance decreases. Further, when over 50000, viscosity of the resin becomes too high, and applying workability of the ink becomes poor.

The preparation process of the polymer is not particularly restricted, and conventionally known methods can be employed. For example, there are a process [1] in which a (meth)acryloyl group is introduced into a part of side chains of a polymer having a hydroxyl group, a process [2] in which an $\alpha,\beta$-unsaturated monomer having a hydroxyl group is subjected to a condensation reaction with a copolymer having a carboxyl group, a process [3] in which an $\alpha,\beta$-unsaturated monomer having an epoxy group is subjected to addition reaction with a copolymer having a carboxyl group, and a process [4] in which an $\alpha,\beta$-unsaturated carboxylic acid is reacted with a polymer having an epoxy group.

Taking the method [4] as an example, a detailed explanation will be given of the method for preparing the polymer used in the present invention. For example, the polymer used in the present invention can be obtained by a process in which a polymer having a glycidyl group is allowed to reacted with an $\alpha,\beta$-unsaturated carboxylic acid such as acrylic acid or the like.

The preferable polymer having a glycidyl group is glycidyl (meth)acrylate-based polymer. As the glycidyl (meth)acrylate-based polymer, for example, a homopolymer of glycidyl (meth)acrylate and a copolymer of glycidyl (meth)acrylate and $\alpha,\beta$-unsaturated monomer having no carboxyl group are exemplified.

As the $\alpha,\beta$-unsaturated monomer having no carboxyl group, various (meth)acrylates, styrene, vinyl acetate, acrylonitrile and the like can be exemplified. If $\alpha,\beta$-unsaturated monomer having a carboxyl group is used, crosslinkage is formed during the copolymerization reaction with glycidyl (meth)acrylate, and increasing in viscosity and gelling are unpreferably caused.

The other detailed condition such as a kind or an amount of the monomer or the polymer employed, have to be concretely specified for satisfying the above described requirements in conducting the methods [1] to [4]. However, a procedure for satisfying the condition is well known to those skilled in the art.

As the polyfunctional isocyanate employed together with the polymer in the present invention, known various polyisocyanates can be used. For example, isophorone diisocyanate, xylylene diisocyanate, hydrogenated xylylene diisocyanate, tolylene diisocyanate, diphenylmethane diisocyanate, 1,6-hexane diisocyanate, a trimer of the above-mentioned isocyanate, a prepolymer obtained by the reaction of polyfunctional alcohol and the above-mentioned diisocyanate and the like can be used.

The ratio used of the polymer to the polyfunctional isocyanate is determined so that the ratio of the number of a hydroxyl group to the number of an isocyanate group in the polymer is from 1/0.01 to 1/1, preferably from 1/0.05 to 1/0.8. The active energy ray curable resin composition may optionally contain the components, such as a UV absorber, a light stabilizer, a reactive diluted monomer, a solvent, a colorant, a photo-polymerization initiator and a lubricant, if necessary.

When the active energy ray curable resin composition is subjected to heat treatment at 100 to 180°C, the ethylenically unsaturated groups, hydroxyl groups and isocyanate groups, contained in the composition, are allowed to react so that the resin is crosslinked. This heat-crosslinked reactant, that is, the surface protecting layer 5, is tack free, thereby another layer is easily printed thereon and the transfer film 1 is easily rolled up.

The pattern layer 7 is used for providing decoration on the surface of the molded product. Examples of the material for the pattern layer 7 include a colored ink which comprises a resin, such as polyvinyl-based resins, polyamide-based resins, polyester-based resins, polyacrylic resins, polyurethane-based resins, polyvinyl acetal-based resins, polyesterurethane-based resins, cellulose-ester-based resins and alkyd resins, as a binder, and a pigment or dye having an appropriate color as a colorant.

The anchor layer 6 is a resin layer formed between two layers for improving adhesion of the upper and the lower layers. In the case of the laminated film shown in Fig. 1, it is used for improving adhesion between the surface protecting layer 5 and the pattern layer 7. Examples of the material of the anchor layer 6 include two-liquid curable urethane resins, melamine-based and epoxy-based heat-curable resins, thermoplastic resins such as vinyl chloride copolymer resins, etc. When a heat-curable resin is employed as the anchor layer 6, heat treatment have to be carried out. However, the releasing film 3 of the present invention is made from a material having resistance to heat at the time when the surface protecting layer 5 is formed. Thereby, the dimension thereof is stable even after the heat treatment.

The joining layer 8 is used for bonding the layers and the releasing film 3 to the deformable film 2. As the joining layer 8, resins, such as acrylic resins, vinyl acrylic resins and polyamide resins, which are suitable for the material of the deformable film 2, are preferably used.

The deformable film 2 to be joined to the transfer film 1 have to be sufficiently flexible so that the surface protecting film is allowed to conform over the cavity surface of the metal mold having a three-dimensional shape with deep draw, during a preparing process for an insert molded product by using a laminated film, for example, as schematically shown in Figs. 7 through 11. Therefore, as the material for the deformable film 2, the material which ensures an extension of 150% is preferably used. The extension is indicated by: (area after preliminary molding / area before preliminary molding) $\times$ 100 (%).

Examples thereof include a soft vinyl chloride film, a non-oriented polypropylene film, a non-oriented polyester film, a polycarbonate film, a film made from an acrylic resin and an acrylic rubber, a film made from a copolymer resin (AS) between styrene and acrylonitrile, and a film made from a copolymer resin (ABS) of styrene, butadiene and acrylonitrile. Two or more layers of the resin films may be superposed to prepare the deformable film.

The structure of the transfer layer 4 of the present invention is not intended to be limited to the embodiment as shown in Fig. 1, and any structure may be adopted as long as it is provided with at least one surface protecting layer 5, which is a heat reactant of, a heat and active energy ray curable resin composition which is comprised of a polymer having a (metha)acryl equivalent of 100 to 300 g/eq, a hydroxyl value of 20 to 500 and a weight-average molecular weight of 5000 to 50000, and multifunctional isocyanate as effective components. For example, when only surface protection is intended in employing the laminated film by utilizing the background pattern and transparency of the molded article, the picture layer 7 can be omitted from the transfer layer 4 (see Fig. 2).

In the embodiment shown in Fig. 1, only the pattern layer 7 is formed for decorative purpose. However, as shown in Fig. 3, a vapor deposition layer 9 may be formed as a layer for decorative purpose, or both the pattern layer 7 and the vapor deposition layer 9 may be formed (not shown). The vapor deposition layer 9 is formed by using at least one metal selected from the group consisting of aluminum, nickel, chromium, indium and tin, by a method such as a vacuum vapor deposition method, a sputtering method and an ion plating method. The releasing film 3 is heated by this vapor deposition process. However, the releasing film 3 of the present invention is made from a material having resistance to heat at the time when the surface protecting layer 5 is formed. Thereby, the dimension thereof is stable even after the heat treatment. The transparent colored layer 10 shown in Fig. 3 is used for coloring the vapor deposition layer 9. The anchor layer 6 is formed between the transfer layers in Fig. 3 in order to improve adhesion.

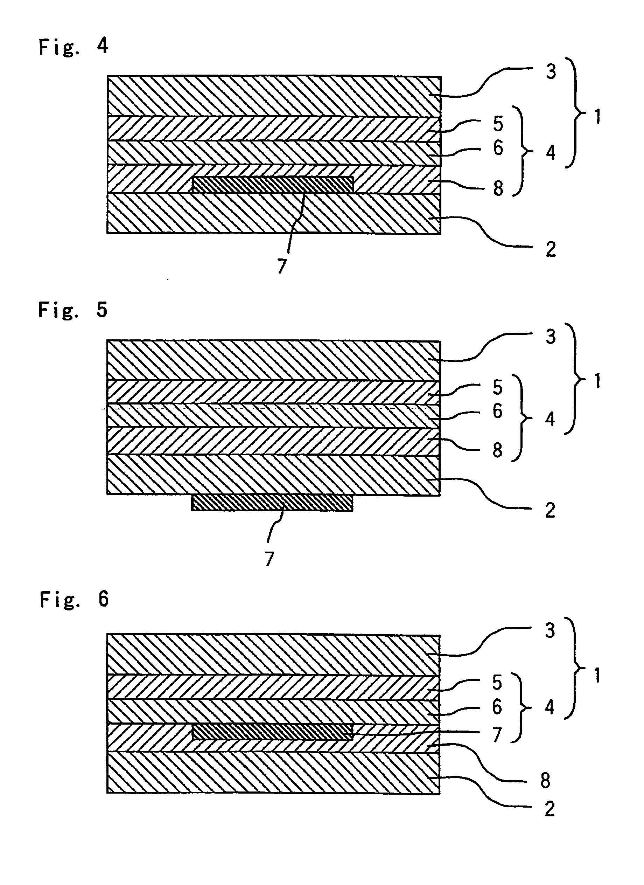

The deformable film 2 may have a layer for decorative purpose on joining face side of the transfer film 1 or on the side opposite to the joining face side, for example, a pattern layer 7, etc. (see Figs. 4 and 5). The joining layer 8 may be formed on joining face side of the deformable film 2, or the joining layer 8 may be omitted from the structure of the transfer layer 4 (see Fig. 6). In any of the cases when the joining layer 8 is formed on the side of deformable film 2, or on the side of transfer film 1, after the joining layer 8 has been formed, it may be once dried prior to the joining process, and then may be taken up, or immediately before the joining process, the joining layer 8 may be formed, and the joining process may be carried out in its undried state.

The following description will discuss the method for preparing an insert molded product according to the present invention by using the laminated film having the layer structure.

First, the releasing film 3 is separated and removed from the laminated film so that an insert film 11 is formed (see Fig. 7). The releasing film 3 needs not be separated immediately before the insertion into the metal mold 12, or the releasing film 3 may be separated from the laminated film long before the insertion into the metal mold 12. However, the former method is suitable in protecting the surface of the insert film 11 from dusts, and also suitable in protecting the surface protecting layer 5 from scratches prior to the irradiation with active energy rays 20 since it is susceptible to scratches. Therefore, the former method is more preferable than the latter.

Next, the insert film 11 thus obtained is inserted and placed in the metal mold 12 so that the side opposite to the face on which the transfer layer 4 is formed, is integrated with the mold resin (see Fig. 8). In this case, as illustrated in Fig. 8, a required portion of the elongated insert film 11, as it is, may be intermittently sent thereto, or the insert film 11 may be formed into a plurality of sheets, and these may be sent thereto sheet by sheet (not shown). In the case when an elongated insert film 11 is used, a feeding device having a positioning mechanism may be used so as to appropriately position a layer for decorative purpose for the insert film 11 on the metal mold 12. Upon sending the insert film 11 intermittently, the position of the insert film 11 may be detected by a sensor, and the insert film 11 may be then secured. Thus, it is possible to always secure the insert film 11 at the same position, and consequently to prevent the layer for decorative purpose from being offset.

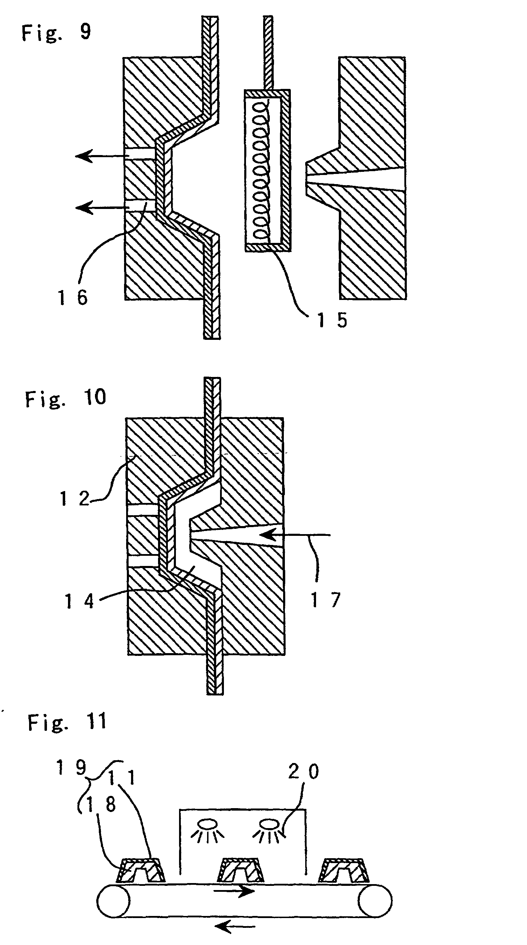

Next, the insert film 11 is preliminarily molded. For example, it is softened by a heating means 15 such as a hot bag, and then subjected to a vacuum suction process through a suction hole 16 formed in the metal mold 12 so that the insert film 11 is conformed over the metal mold cavity face 13 (see Fig. 9).

Thereafter, the metal mold 12 is closed, and the cavity 14 is filled with injected mold resin 17 in a molten state (see Fig. 10). Thus, simultaneously with the formation of a resin molded product 18, its surface is coated with the insert film 11. Examples of the mold resin 17 include generally-used resins such as polystyrene-based resins, polyolefin-based resins, ABS resins and AS resins. Examples thereof also include generally-used engineering resins, such as polyphenylene oxide-polystyrene-based resins, polycarbonate-based resins, polyacetal-based resins, acrylic resins, polycarbonate denatured polyphenylene ether resins, polyethylene terephthalate resins, polybutylene terephthalate resins, ultra-high molecular weight polyethylene resins, and super engineering resins, such as polysulfone resins, polyphenylene sulfide-based resins, polyphenylene oxide-based resins, polyacrylate resin, polyetherimide resin, polyimide resin, liquid crystal polyester resin, and polyaryl-based heat resistant resins. Composite resins having a reinforcing material such as glass fiber and inorganic filler added thereto may also be used.

Lastly, the resin molded product 18 is cooled off and the resulting insert molded product 19 is taken out of the metal mold 12, and this is irradiated with active energy rays 20 (see Fig. 11). The surface protecting layer 5 of the present invention contains ethylenically unsaturated groups, and the ethylenically unsaturated groups are polymerized upon irradiation with the active energy rays 20, with the result that the resin is crosslinked and completely cured. As the active energy rays 20, electronic rays, ultraviolet rays, $\gamma$ rays, etc. are employed. The irradiation conditions are determined in accordance with the material of the surface protecting layer 5.

A bonding layer may be formed on a face of the insert film 11 contacting the resin molded product 18 so as to bond the layers. As the bonding layer, a heat-sensitive or pressure-sensitive resin suitable for the material of the resin molded product 18 is properly used. For example, in the case when a polyacrylic resin is used as the material of the resin molded product 18, a polyacrylic resin is preferably used. In the case when a polyphenylene oxide-polystyrene-based resin, a polycarbonate-based resin, a styrene copolymer-based resin or a polystyrene-based blended resin is used as the material of the resin molded product 18, a resin having affinity therewith, such as a polyacrylic resin, polystyrene-based resin and polyamide-based resin, may be used. In the case when a polypropylene resin is used as the material of the resin molded product 18, a chlorinated polyolefin resin, chlorinated ethylene-vinylacetate copolymer resin, cyclized rubber and coumarone-indene resin, may be used.

Examples

The present invention will be further specifically described by the following examples and comparative examples. However, the present invention is not intended to be limited thereby. In the examples, all "parts" and "%" are based on weight.

First, a polyethylene terephthalate film having a thickness of 38 $\mu$m was used as a releasing film. This polyethylene terephthalate film has resistance to heat at the time when the surface protecting layer is formed. On one surface thereof was formed a releasing layer by applying a melamine resin-based releasing agent with a thickness of 1 $\mu$m by the gravure printing process.

On the releasing layer formed surface of this releasing film was formed a layer consisting of an active energy ray curable composition made by blending 200 parts (solid content: 100 parts) of the varnish described afterward, 10 parts of 1,6-hexane diisocyanate trimer (trade name: CORONATE HX, made by Nippon Polyurethane Kogyo K.K.), 5 parts of a photopolymerization initiator (trade name: IRGACURE 184, made by Ciba Specialty Chemicals Co., Ltd.), 8 parts of a UV absorber and 2 parts of a light stabilizer, by the lip coat method. The thickness of this layer was set to 5 $\mu$m.

The layer consisting of the active energy ray curable composition was semi-crosslinked and cured by applying heat at 150°C for 20 seconds to form a surface protecting layer, and on this were successively printed and formed an urethane-based ink as an anchor layer, an acryl-based ink as a pattern layer and an acrylic resin as a joining layer by the gravure printing method to obtain a transfer film.

The above-mentioned varnish was obtained as follows: First, into a reacting device equipped with a stirring device, cooling tube, dropping funnel and nitrogen introducing tube were charged 250 parts of glycidyl methacrylate (hereinafter, referred to as GMA), 75 parts of methyl methacrylate (hereinafter, referred to as MMA), 1.3 parts of lauryl mercaptan, 1000 parts of butyl acetate and 7.5 parts of 2,2'-azobisisobutyronitrile (hereinafter, referred to as AIBN), and they were then heated until the temperature of the content rose to approximately 90°C under nitrogen flow over one hour and kept at this temperature for one hour. Then, from a dropping funnel preliminarily charged with a mixture consisting of 750 parts of GMA, 225 parts of MMA, 3.7 parts of lauryl mercaptan and 22.5 parts of AIBN, the mixture was dropped into the reacting device under nitrogen flow over about two hours, and kept at the same temperature for three hours. To this was added 10 parts of AIBN and the mixture was kept at the same temperature for one hour. Then, the mixture was heated to 120°C, and kept at this temperature for two hours. This was cooled to 60°C, the nitrogen introducing tube was replaced by an air introducing tube, and to this were added 507 parts of acrylic acid (hereinafter, referred to as AA), 2.0 parts of methoquinone and 5.4 parts of triphenyl phosphine with mixing. This was heated to 110°C under air bubbling. This temperature was kept for 8 hours, to this was charged 1.4 parts of methoquinone. This mixture was cooled, and to this was added ethyl acetate until the non-volatile content reached 50% to obtain the varnish. The polymer contained in the varnish had an acryl equivalent weight of 214 g/eq, a hydroxyl value of 262 and a weight-average molecular weight (in terms of styrene by GPC) of 20000. The UV absorber was hydroxyphenyl benzotriazole.

On the other hand, a film made of an acrylic resin and acrylic rubber having a thickness of 200 μm was used as the deformable film. This film had an extension rate of 700% represented by:

(area after preliminary molding / area before preliminary molding) $\times$ 100 (%).

The transfer film and the deformable film were superposed so that the transfer layer consisting of the surface protecting layer, the anchor layer, the pattern layer and the joining layer is faced inside, and this was thermally press-bonded by passing between a heating roller and a cooling roller to obtain a laminated film. At this time, the releasing film side of the laminated film was allowed to contact with the heating roller.

The releasing film was separated and removed from this laminated film to form an insert film, and this insert film was inserted and placed inside a metal mold so that the side opposite to the face on which the transfer layer is formed, is integrated with the mold resin, the insert film was preliminarily molded in a heating state at 150°C so that it was conformed over the mold cavity face, the metal mold was closed, and the cavity was filled with injected mold resin in a molten state. Thus, a resin molded product was obtained with the surface being coated with the insert film, the resulting insert molded product was taken out of the metal mold, and it was irradiated with active energy rays so that the surface protecting layer was cured. The molding conditions are: a resin temperature of 240°C, a mold temperature of 55°C and a resin pressure of approximately 300 kg/cm$^2$. The molded product, made from an acrylic resin, was formed into a tray shape having a longitudinal length of 95 mm, a lateral length of 65 mm, a rising edge height of 4.5 mm and R at the corner part of 2.5 mm. Ultraviolet rays were used as the active energy rays, and the irradiation conditions were: 120 w/cm, two lamps, a lamp height of 10 cm, and a belt speed of 2.5 m/min.

The insert molded product thus obtained had a surface of a three-dimensional shape having deep draw with the transfer layer formed thereon, and also had an excellent appearance and excellent abrasion resistance and chemical resistance.

Effects of the Invention

The laminated film for preparing an insert molded product, the method for preparing an insert film using the laminated film and the method for preparing such an insert molded product of the present invention have the above-mentioned structures and functions. Therefore, it is possible to obtain the following effects.

In other words, the laminated film for preparing an insert molded product of the present invention is composed of a deformable film, and a transfer film applied on the deformable film with its transfer layer side serving as a joining face. The transfer film is composed of at least one layer which comprises a releasing film, and a surface protecting layer formed on one surface of the releasing film, which is a heat-crosslinked product of a heat and active energy ray curable resin composition.

Therefore, even if the releasing film coated with the active energy ray curable resin composition is passed through heating atmosphere at the time when the surface protecting layer is formed, the releasing film is not extended in the tensile direction due to tension applied thereto for film feeding, and consequently is not susceptible to surface waves and cuts. Thus, the application of this laminated film makes it possible to provide a molded product having an excellent appearance with excellent abrasion resistance and chemical resistance.

When an insert molded product is prepared by using this laminated film, the releasing film is separated and removed from the laminated film before it is inserted and placed in a metal mold so as to form an insert film, and since the transfer layer is then preliminarily molded in a state where it is supported by the deformable film having excellent extending property, it is possible to obtain a molded product having a three-dimensional shape with deep draw the surface of which is coated with the transfer layer.

**Claims**

1.   Laminated film for preparing an insert molded product comprising

    i) a releasing film (3) made of a heat resistant film material having a releasing face,

    ii) a transfer layer (4) comprising a surface protecting layer (5), the surface protecting layer (5) is formed on the releasing face of the releasing film (3) and is a heat reactant of a heat and active ray curable resin composition comprised of a polymer having a (meth)acryl equivalent of 100-300 g/eq, a hydroxyl value of 20-500 and a weight average molecular weight of 5.000-50.000, and a multifunctional isocyanate as effective components;

    iii) a deformable film (2) made of a film material formed on the transfer face of the transfer layer (4), and

    iv) a joining layer (8) for bonding the deformable film (2), which is placed in the transfer layer (4) or between the transfer layer (4) and the deformable film (2).

2.   The laminated film of claim 1, wherein the releasing film is a polyethylene terephthalate film.

3.   The laminated film of claim 1 or 2, wherein the deformable film is at lest one kind of film selected from a soft vinyl chloride film, a non-oriented polypropylene film, a non-oriented polyester film, a polycarbonate film, a film made from an acrylic resin and an acrylic rubber, a film made from a copolymer resin (AS) of styrene and acrylonitrile, and a film made from a copolymer resin (ABS) of styrene, butadiene and acrylonitrile.

4.   The laminated film of any one of claims 1-3, wherein said polymer is a reaction product obtained by subjecting $\alpha$, $\beta$-unsaturated monocarbocyclic acid to addition reaction with glycidyl (metha)acrylate-based polymer.

5.   The laminated film of claim 4, wherein the glycidyl (meth)acrylate based polymer is a homopolymer of glycidyl (meth)acrylate, or a copolymer of glycidyl (meth)acrylate and $\alpha,\beta$-unsaturated monomer containing no carboxyl group.

6.   The laminated film of any one of claims 1-5, wherein the transfer layer (4) has a pattern layer (7) for decorative purpose.

7.   The laminated film of any one of claims 1-6, wherein the patter layer (7) for decorative purpose is formed on a surface of the deformable film (2).

8.   A method for preparing an insert molded product having a three-dimensional shape with deep-draw, comprising the steps of:

    i) removing the releasing film (3) from a laminated film as defined in claim 1

    ii) inserting and placing the resulting insert film into a metal mold with the deformable film (2) facing inside

    iii) preliminary molding the insert film so as to allow it to conform over the mold cavity face

    iv) injecting resin into the cavity so as to be filled with the resin with the metal mold being closed, thereby molding the resin, the insert film being bonded thereto and allowed to cover the surface thereof and

    v) irradiating the surface protecting layer of the insert film with active energy rays so as to cure the surface protecting layer.

**9.** A process for preparing a laminated film as defined in claim 1, which comprises:

i) providing a releasing film (3) made of a heat resistant film material having a releasing face,

ii) applying, on the releasing face of the releasing film (3), a heat and active energy ray curable resin composition comprised of a polymer having a (meth)acryl equivalent of 100-300 g/eq, a hydroxyl value of 20-500 and a weight-average molecular weight of 5.000-50.000, and multifunctional isocyanate as effective components,

iii) heating the heat and active energy ray curable resin composition, and semi-crosslinking it, to form a surface protecting layer (5),

iv) placing thereon a joining layer, for bonding the following deformable film, and

v) placing thereon a deformable film (2) made of a film material having sufficient flexibility to be deformed and conformed over the mold cavity face corresponding to a three-dimensional shape having deep-draw

**10.** Method of claim 9, which further comprises after step (iii) and before step (iv) a step of forming an anchor and/or a pattern layer on the surface protecting layer (5).

**Patentansprüche**

**1.** Laminierte Folie zur Herstellung eines Insertformprodukts, umfassend:

i) eine Trennfolie (3) aus einem wärmebeständigen Folienmaterial mit einer Trennoberfläche,

ii) eine Übertragungsschicht (4), umfassend eine Oberflächenschutzschicht (5), wobei die Oberflächenschutzschicht (5) auf die Trennoberfläche der Trennfolie (3) geformt ist und ein Wärmereaktant aus einer Harzzusammensetzung ist, die durch Wärme und aktive Strahlen härtbar ist und ein Polymer mit einem (Meth)acryl-Äquivalent von 100-300 g/äq., einem Hydroxylwert von 20-500 und einem Gewichtsmittel des Molekulargewichts von 5.000-50.000 und ein multifunktionelles Isocyanat als wirksame Komponenten umfaßt,

iii) eine verformbare Folie (2) aus einem Folienmaterial, das auf der Übertragungsoberfläche der Übertragungsschicht (4) geformt ist, und

iv) eine Verbindungsschicht (8) zum Verbinden der verformbaren Folie (2), die in der Übertragungsschicht (4) oder zwischen der Übertragungsschicht (4) und der verformbaren Folie (2) angebracht ist.

**2.** Laminierte Folie gemäß Anspruch 1, worin die Trennfolie eine Polyethylenterephthalatfolie ist.

**3.** Laminierte Folie gemäß Anspruch 1 oder 2, worin die verformbare Folie wenigstens eine Folienart ist ausgewählt aus einer weichen Vinylchloridfolie, einer nicht-orientierten Polypropylenfolie, einer nicht-orientierten Polyesterfolie, einer Polycarbonatfolie, einer Folie aus einem Acrylharz und einem Acrylkautschuk, einer Folie aus einem Copolymerharz (AS) aus Styrol und Acrylonitril und einer Folie aus einem Copolymerharz (ABS) aus Styrol, Butadien und Acrylonitril.

**4.** Laminierte Folie gemäß einem der Ansprüche 1 bis 3, worin das Polymer ein Reaktionsprodukt ist, dadurch erhalten, daß $\alpha,\beta$-ungesättigte Monocarbonsäure einer Additionsreaktion mit einem auf Glycidyl(meth)acrylatbasierenden Polymer unterworfen wird.

**5.** Laminierte Folie gemäß Anspruch 4, worin das auf Glycidyl(meth)acrylat-basierende Polymer ein Homopolymer aus Glycidyl(meth)acrylat oder ein Copolymer aus Glycidyl(meth)acrylat und $\alpha,\beta$-ungesättigtem Monomer, das keine Carboxylgruppe enthält, ist.

**6.** Laminierte Folie gemäß einem der Ansprüche 1 bis 5, worin die Übertragungsschicht (4) eine Dekorschicht (7) für dekorative Zwecke aufweist.

7. Laminierte Folie gemäß einem der Ansprüche 1 bis 6, worin die Dekorschicht (7) für dekorative Zwecke auf einer Oberfläche der verformbaren Folie (2) geformt ist.

8. Verfahren zur Herstellung eines Insertformprodukts, das eine dreidimensionale Form mit Tiefzug aufweist, umfassend die Schritte:

    i) Entfernen der Trennfolie (3) von einer laminierten Folie wie in Anspruch 1 definiert,

    ii) Einsetzen und Plazieren der resultierenden Insertfolie in eine Metallform, wobei die verformbare Folie (2) der Innenseite zugewandt ist,

    iii) Vorformen der Insertfolie, so daß sie sich über die Oberfläche des Formhohlraums anpassen läßt,

    iv) Einspritzen von Harz in den Hohlraum, so daß er mit dem Harz gefüllt wird, wobei die Metallform geschlossen ist, wodurch das Harz geformt wird, wobei die Insertfolie damit verbunden.wird und sich die Oberfläche davon bedecken läßt und

    v) Bestrahlen der Oberflächenschutzschicht der Insertfolie mit aktiven Energiestrahlen, um die Oberflächenschutzschicht zu härten.

9. Verfahren zur Herstellung einer laminierten Folie wie in Anspruch 1 definiert, das umfaßt:

    i) Bereitstellen einer Trennfolie (3) aus einem wärmebeständigen Folienmaterial mit einer Trennoberfläche,

    ii) Aufbringen einer Harzzusammensetzung, die durch Wärme und aktive Energiestrahlung härtbar ist die und ein Polymer mit einem (Meth)acryl-Äquivalent von 100-300 g/äq., einen Hydroxylwert von 20-500 und einem Gewichtsmittel des Molekulargewichts von 5.000-50.000 und multifunktionelles Isocyanat als effektive Komponenten umfaßt, auf die Trennoberfläche der Trennfolie (3),

    iii) Erwärmen der Harzzusammensetzung, die durch Wärme und aktive Energiestrahlung härtbar ist, und Semivernetzen derselben, um eine Oberflächenschutzschicht (5) zu formen,

    iv) Aufbringen einer Verbindungsschicht darauf zum Verbinden der folgenden verformbaren Folie und

    v) Aufbringen einer verformbaren Folie (2) darauf, die hergestellt ist aus einem Folienmaterial, das genügende Flexibilität aufweist, um verformt und über die Oberflächen des Formhohlraums entsprechend einer dreidimensionalen Form mit Tiefzug angepaßt zu werden.

10. Verfahren gemäß Anspruch 9, das nach dem Schritt (iii) und vor Schritt (iv) ferner einen Schritt des Formens einer Verankerungs- und/oder einer Dekorschicht auf der Oberflächenschutzschicht (5) umfaßt.

**Revendications**

1. Film stratifié pour préparer un produit moulé à insert comprenant

    i) un film de séparation (3) constitué par un matériau de type film résistant à la chaleur ayant une face de séparation,
    ii) une couche de transfert (4) comprenant une couche de protection de surface (5), la couche de protection de surface (5) est formée sur la face de séparation du film de séparation (3) et est un réactif thermique d'une composition de résine durcissable à la chaleur et aux rayons actifs constituée par un polymère ayant un équivalent de (méth)acryle de 100-300 g/eq, un indice d'hydroxyle de 20-500 et une masse moléculaire moyenne en poids de 5 000-50 000, et un isocyanate multifonctionnel comme composants efficaces ;
    iii) un film déformable (2) constitué par un matériau de type film formé sur la face de transfert de la couche de transfert (4), et
    iv) une couche de jonction (8) pour lier le film déformable (2), qui est placée dans la couche de transfert (4) ou entre la couche de transfert (4) et le film déformable (2).

**2.** Film stratifié selon la revendication 1 où le film de séparation est un film de polyéthylène téréphtalate.

**3.** Film stratifié selon la revendication 1 ou 2 où le film déformable est au moins un type de film choisi parmi un film de chlorure de vinyle souple, un film de polypropylène non orienté, un film de polyester non orienté, un film de polycarbonate, un film constitué par une résine acrylique et un caoutchouc acrylique, un film constitué par une résine de copolymère (AS) de styrène et d'acrylonitrile, et un film constitué par une résine de copolymère (ABS) de styrène, butadiène et acrylonitrile.

**4.** Film stratifié selon l'une quelconque des revendications 1 - 3 où ledit polymère est un produit de réaction obtenu en soumettant un acide monocarboxylique α, β-insaturé à une réaction d'addition avec un polymère à base de (méth)acrylate de glycidyle.

**5.** Film stratifié selon la revendication 4 où le polymère à base de (méth)acrylate de glycidyle est un homopolymère de (méth)acrylate de glycidyle ou un copolymère de (méth)acrylate de glycidyle et d'un monomère α, β-insaturé ne contenant pas de groupe carboxyle.

**6.** Film stratifié selon l'une quelconque des revendications 1 - 5 où la couche de transfert (4) a une couche de motif (7) à des fins décoratives.

**7.** Film stratifié selon l'une quelconque des revendications 1 - 6 où la couche de motif (7) à des fins décoratives est formée sur une surface du film déformable (2).

**8.** Procédé pour préparer un produit moulé à insert ayant une forme tridimensionnelle avec emboutissage profond, comprenant les étapes de :

i) retrait du film de séparation (3) d'un film stratifié selon la revendication 1
ii) insertion et mise en place du film d'insert résultant dans un moule métallique avec le film déformable (2) tourné vers l'intérieur
iii) moulage préliminaire du film d'insert de manière à lui permettre d'épouser la forme de la face de la cavité du moule
iv) injection d'une résine dans la cavité de manière qu'elle soit remplie de résine tandis que le moule métallique est fermé, pour mouler la résine, le film d'insert étant lié à celle-ci et amené à couvrir sa surface, et
v) irradiation de la couche de protection de surface du film d'insert avec des rayons d'énergie actifs de manière à durcir la couche de protection de surface.

**9.** Procédé pour préparer un film stratifié selon la revendication 1 qui comprend :

i) la fourniture d'un film de séparation (3) constitué par un matériau de type film résistant à la chaleur ayant une face de séparation,
ii) l'application, sur la face de séparation du film de séparation (3), d'une composition de résine durcissable à la chaleur et par des rayons d'énergie actifs constituée par un polymère ayant un équivalent de (méth)acryle de 100 - 300 g/eq, un indice d'hydroxyle de 20 - 500 et une masse moléculaire moyenne en poids de 5 000 - 50 000, et un isocyanate multifonctionnel comme composants efficaces,
iii) le chauffage de la composition de résine durcissable à la chaleur et par des rayons d'énergie actifs, et sa semi-réticulation, pour former une couche de protection de surface (5),
iv) la mise en place sur celle-ci d'une couche de jonction pour lier le film déformable suivant, et
v) la mise en place sur celle-ci d'un film déformable (2) constitué par un matériau de type film ayant une flexibilité suffisante pour être déformé et épouser la forme de la face de la cavité du moule correspondant à une forme tridimensionnelle ayant un emboutissage profond.

**10.** Procédé selon la revendication 9 qui comprend en outre, après l'étape (iii) et avant l'étape (iv), une étape de formation d'une couche d'ancrage et/ou de motif sur la couche de protection de surface (5).

Fig. 1

Fig. 2

Fig. 3

Fig. 4

Fig. 5

Fig. 6

Fig. 7

Fig. 8

Fig. 9

Fig. 10

Fig. 11